# EUROPÄISCHE PATENTANMELDUNG

(11) **EP 2 894 407 A1**
(43) Veröffentlichungstag der Anmeldung: **15.07.2015**
(21) Anmeldenummer: 14197514.4
(22) Anmeldetag: 12.12.2014
(51) Int. Cl.: F24C 3/12, F23N 5/24, F16K 31/56, F16K 35/02

(54) **Betätigungsvorrichtung für ein Gasventil, Gasventil und Kochstelle**

(30) Priorität: 17.12.2013 ES 201331846
(71) Anmelder: BSH Hausgeräte GmbH, 81739 München (DE)
(72) Erfinder: Palacios Valdueza, Luis Antonio, 39610 Astillero (ES); Placer Maruri, Emilio, 39120 Liencres (ES); Saiz Gonzalez, Roberto, 39539 Santander (ES)

(57) **Zusammenfassung**

Die Erfindung betrifft eine Betätigungsvorrichtung (6) für ein Gasventil (1) mit einem Betätigungselement (43), wobei das Betätigungselement (43) mit einem Schließelement (3) des Gasventils (1) wirkverbunden ist, wobei das Betätigungselement (43) von einer Offenposition, in der das Gasventil (1) geöffnet ist, in eine Schließposition, in der das Gasventil (1) geschlossen ist, verschiebbar ist, und wobei das Betätigungselement (43) mit Hilfe einer ersten Federeinrichtung (27) in Richtung der Schließposition vorgespannt ist, und einer Verriegelungseinrichtung (53), die eine an einem Gehäuse (7) der Betätigungsvorrichtung (6) vorgesehene Kulissenführung (47) und einen an dem Betätigungselement (43) vorgesehenen Führungsstift (46) aufweist, der in die Kulissenführung (47) eingreift, wobei das Betätigungselement (43) mit Hilfe einer zweiten Federeinrichtung (42) derart vorgespannt ist, dass der Führungsstift (46) in der Offenposition in einen ersten Verriegelungsabschnitt (48) der Kulissenführung (47) eingreift, um das Betätigungselement (43) in der Offenposition zu verriegeln, wobei der Führungsstift (46) durch ein Verlagern des Betätigungselements (43) entgegen einer Federkraft der zweiten Federeinrichtung (42) aus dem ersten Verriegelungsabschnitt (48) heraushebbar ist und wobei das Betätigungselement (43), sobald der Führungsstift (46) aus dem ersten Verriegelungsabschnitt (48) herausgehoben ist, von einer Federkraft der ersten Federeinrichtung (27) selbsttätig in die Schließposition verschiebbar ist. Die Erfindung betrifft ferner ein Gasventil (1) mit einem Ventilgehäuse (2), einem in dem Ventilgehäuse (2) drehbar angeordneten Schließelement (3) und einer derartigen Betätigungsvorrichtung (6). Weiterhin betrifft die Erfindung eine Kochstelle (5), insbesondere eine Gaskochstelle, mit einer derartigen Betätigungsvorrichtung (6) und/oder einem derartigen Gasventil (1).

## Beschreibung

Die vorliegende Erfindung betrifft eine Betätigungsvorrichtung für ein Gasventil, ein Gasventil und eine Kochstelle.

Ein Gasventil, beispielsweise für eine Gaskochstelle, kann ein Ventilgehäuse und ein in dem Ventilgehäuse drehbar aufgenommenes Schließelement aufweisen. Das Schließelement kann beispielsweise eine Drosselklappe oder eine Drosselkugel sein. Das Gasventil kann als Auf-Zu-Ventil ausgebildet und dazu eingerichtet sein, eine Gashauptleitung der Gaskochstelle zu öffnen oder abzusperren. Zum Betätigen des Schließelements ist dieses zum Beispiel mit einem Betätigungselement verbunden. Das Betätigungselement kann ein Handgriff sein. Mit Hilfe einer auf das Betätigungselement aufgebrachten rotatorischen Bewegung kann das Gasventil wahlweise geöffnet oder geschlossen werden.

Vor diesem Hintergrund besteht eine Aufgabe der vorliegenden Erfindung darin, eine verbesserte Betätigungsvorrichtung für ein Gasventil zur Verfügung zu stellen.

Demgemäß wird eine Betätigungsvorrichtung für ein Gasventil mit einem Betätigungselement vorgeschlagen, wobei das Betätigungselement mit einem Schließelement des Gasventils wirkverbunden ist, wobei das Betätigungselement von einer Offenposition, in der das Gasventil geöffnet ist, in eine Schließposition, in der das Gasventil geschlossen ist, verschiebbar ist und wobei das Betätigungselement mit Hilfe einer ersten Federeinrichtung in Richtung der Schließposition vorgespannt ist. Die Betätigungsvorrichtung umfasst ferner eine Verriegelungseinrichtung, die eine an einem Gehäuse der Betätigungsvorrichtung vorgesehene Kulissenführung und einen an dem Betätigungselement vorgesehenen Führungsstift aufweist, der in die Kulissenführung eingreift, wobei das Betätigungselement mit Hilfe einer zweiten Federeinrichtung derart vorgespannt ist, dass der Führungsstift in der Offenposition in einen ersten Verriegelungsabschnitt der Kulissenführung eingreift, um das Betätigungselement in der Offenposition zu verriegeln, wobei der Führungsstift durch ein Verlagern des Betätigungselements entgegen einer Federkraft der Federeinrichtung aus dem ersten Verriegelungsabschnitt heraushebbar ist und wobei das Betätigungselement, sobald der Führungsstift aus dem ersten Verriegelungsabschnitt herausgehoben ist, von einer Federkraft der ersten Federeinrichtung selbsttätig in die Schließposition verschiebbar ist.

Die erste Federeinrichtung ist vorzugsweise eine Rotations- oder Drehfeder. Mit Hilfe der Betätigungsvorrichtung wird eine auf das Betätigungselement aufgebrachte translatorische Bewegung in eine rotatorische Bewegung des Schließelements des Gasventils umgesetzt. Hierdurch ist die Betätigungsvorrichtung auch bei beengten Platzverhältnissen einsetzbar. Dadurch, dass die Verriegelungseinrichtung vorgesehen ist, wird ein versehentliches Öffnen des Gasventils zuverlässig verhindert. Zum Schließen des Gasventils ist lediglich eine translatorische Bewegung des Betätigungselements erforderlich. Insbesondere ist lediglich eine Druckbewegung auf das Betätigungselement erforderlich, wobei das Betätigungselement selbsttätig von der Federkraft der ersten Federeinrichtung in die Schließposition verschoben wird und wobei gleichzeitig das Gasventil mit Hilfe der ersten Federeinrichtung geschlossen wird. Hierdurch kann das Gasventil bei Bedarf sehr schnell im Sinne eines Notausschalters geschlossen werden. An dem Betätigungselement kann ein Betätigungsknopf der Betätigungsvorrichtung vorgesehen sein. Insbesondere ist der Betätigungsknopf auf das Betätigungselement aufgesteckt.

Gemäß einer Ausführungsform ist eine erste Verschieberichtung des Betätigungselements von der Offenposition in die Schließposition senkrecht zu einer zweiten Verschieberichtung des Betätigungselements beim Herausheben des Führungsstifts aus dem ersten Verriegelungsabschnitt.

Unter "senkrecht" ist vorliegend ein Winkel von 90° ± 10°, weiter bevorzugt von 90° ± 5°, weiter bevorzugt von 90° ± 1°, weiter bevorzugt von genau 90° zu verstehen. Beim Herausheben des Führungsstifts aus dem Verriegelungsabschnitt wird das Betätigungselement insbesondere gegen die Federkraft der zweiten Federeinrichtung in der zweiten Verschieberichtung bewegt. Mit Hilfe der Federkraft der ersten Federeinrichtung wird das Betätigungselement selbsttätig in der ersten Bewegungsrichtung verlagert. Hierdurch kann das Gasventil sehr schnell geschlossen werden.

Gemäß einer weiteren Ausführungsform ist die Kulissenführung U-förmig.

Die Kulissenführung ist insbesondere an einem Gehäuseoberteil des Gehäuses der Betätigungsvorrichtung vorgesehen. Insbesondere ist beidseitig des Betätigungselements jeweils eine U-förmige Kulissenführung in oder an dem Gehäuseoberteil angeordnet. Das Betätigungselement kann zwei Führungsstifte aufweisen. Hierdurch ist das Betätigungselement mit Hilfe seiner zwei Führungsstifte beidseitig geführt. Ein Verkanten oder Verklemmen des Betätigungselements kann dadurch verhindert werden.

Gemäß einer weiteren Ausführungsform weist die Kulissenführung einen zweiten Verriegelungsabschnitt auf, in den der Führungsstift in der Schließposition eingreift, um das Betätigungselement in der Schließposition zu verriegeln.

Die Kulissenführung kann neben den beiden voneinander beabstandet und insbesondere parallel zueinander angeordneten Verriegelungsabschnitten einen bezüglich der Verriegelungsabschnitte senkrecht verlaufenden Verbindungsabschnitt umfassen.

Gemäß einer weiteren Ausführungsform ist der Führungsstift durch ein Verlagern des Betätigungselements entgegen der Federkraft der zweiten Federeinrichtung aus dem zweiten Verriegelungsabschnitt heraushebbar, wobei das Betätigungselement, sobald der Führungsstift aus dem zweiten Verriegelungsabschnitt herausgehoben ist, entgegen der Federkraft der ersten Federeinrichtung in die Offenposition verschiebbar ist.

Dadurch, dass das Betätigungselement in der Schließposition verriegelt ist, kann zum Öffnen des Gasventils das Betätigungselement durch Aufbringen einer entgegen der Federkraft der zweiten Federeinrichtung wirkenden Druckkraft auf das Betätigungselement aus dem zweiten Verriegelungsabschnitt herausgehoben werden. Gleichzeitig kann das Betätigungselement entgegen der Federkraft der ersten Federeinrichtung in Richtung der Offenposition verschoben werden, um das Gasventil zu öffnen. Somit sind insbesondere zwei senkrecht zueinander angeordnete Bewegungskomponenten zum Öffnen des Gasventils erforderlich. Hierdurch können sicherheitstechnische Vorgaben an Gasherde mit einer derartigen Betätigungsvorrichtung zuverlässig erfüllt werden.

Gemäß einer weiteren Ausführungsform ist das Betätigungselement mit einem Schwingarm wirkverbunden, der eine translatorische Bewegung des Betätigungselements in eine rotatorische Bewegung eines Wellenabschnitts des Schwingarms umsetzt, wobei der Wellenabschnitt mit dem Schließelement gekoppelt ist.

Insbesondere ist die zweite Federeinrichtung auf dem Wellenabschnitt des Schwingarms angeordnet. Vorzugsweise ist die zweite Federeinrichtung zwischen einem Vorsprung, der an dem Wellenabschnitt vorgesehen ist, und einem Gehäuseunterteil des Gehäuses der Betätigungsvorrichtung vorgespannt.

Gemäß einer weiteren Ausführungsform ist das Betätigungselement mit Hilfe eines Verbindungselements mit dem Schwingarm wirkverbunden.

Das Verbindungselement kann mit Hilfe des Betätigungselements in dem Gehäuse der Betätigungsvorrichtung verschiebbar sein. Das Verbindungselement ist insbesondere ein Kunststoffspritzgussbauteil.

Gemäß einer weiteren Ausführungsform ist das Verbindungselement mit Hilfe eines Verbindungsstifts mit dem Schwingarm gekoppelt, wobei der Verbindungsstift in einem an dem Schwingarm vorgesehenen Langloch aufgenommen ist und wobei der Verbindungsstift beim Verschieben des Betätigungselements von der Offenposition in die Schließposition oder umgekehrt in dem Langloch verlagerbar ist.

Der Verbindungsstift ist insbesondere ein Stahlstift mit einem kreisrunden Querschnitt. Aus einer Unterseite des Basisabschnitts kann sich ein rippenförmiger Verbindungsabschnitt heraus erstrecken. An dem rippenförmigen Verbindungsabschnitt kann eine Bohrung vorgesehen sein, in der der Verbindungsstift aufgenommen ist. Insbesondere beim Verschieben des Betätigungselements gleitet der Verbindungsstift in dem Langloch.

Gemäß einer weiteren Ausführungsform ist die zweite Federeinrichtung zwischen dem Verbindungselement und dem Betätigungselement angeordnet.

Die zweite Federeinrichtung ist vorzugsweise eine Zylinder- oder Schraubenfeder. Insbesondere drückt die zweite Federeinrichtung das Betätigungselement von dem Verbindungselement weg.

Gemäß einer weiteren Ausführungsform weist das Verbindungselement eine Führungsnut auf, in der ein Eingriffsabschnitt des Betätigungselements geführt ist.

Insbesondere weist das Betätigungselement einen Grundkörper auf, aus dem sich seitlich zwei leistenförmige Eingriffsabschnitte heraus erstrecken. Das Verbindungselement weist vorzugsweise zwei einander gegenüberliegend angeordnete Führungsnuten auf. Mit Hilfe der Eingriffsabschnitte ist das Betätigungselement an dem Verbindungselement geführt.

Gemäß einer weiteren Ausführungsform ist der Schwingarm verschwenkbar an dem Verbindungselement angelenkt.

Insbesondere ist der Schwingarm mit Hilfe des Verbindungsstifts verschwenkbar an dem Verbindungselement angelenkt. Der Schwingarm umfasst vorzugsweise einen Wellenabschnitt und einen sich seitlich aus dem Wellenabschnitt heraus erstreckenden Befestigungsabschnitt. An dem Befestigungsabschnitt kann das Langloch vorgesehen sein.

Gemäß einer weiteren Ausführungsform ist das Gehäuse an einem Ventilgehäuse des Gasventils festklemmbar.

Hierdurch ist die Betätigungsvorrichtung schnell an dem Gasventil montierbar oder von diesem demontierbar.

Gemäß einer weiteren Ausführungsform weist das Gehäuse ein Gehäuseoberteil und ein Gehäuseunterteil auf, zwischen denen das Ventilgehäuse festklemmbar ist.

An dem Gehäuseunterteil kann ein erster Klemmschellenabschnitt vorgesehen sein. Ferner kann an dem Gehäuseoberteil ein zweiter zu dem ersten Klemmschellenabschnitt korrespondierender Klemmschellenabschnitt vorgesehen sein. Die Klemmschellenabschnitte sind insbesondere miteinander verschnappbar oder verclipsbar.

Weiterhin wird ein Gasventil mit einem Ventilgehäuse, einem in dem Ventilgehäuse drehbar angeordneten Schließelement und einer derartigen Betätigungsvorrichtung vorgeschlagen.

Das Gasventil ist vorzugsweise als Auf-Zu-Ventil ausgebildet. Insbesondere kann das Gasventil dazu eingerichtet sein, eine Gashauptleitung zu schließen oder zu öffnen.

Ferner wird eine Kochstelle, insbesondere eine Gaskochstelle, mit einer derartigen Betätigungsvorrichtung und/oder einem derartigen Gasventil vorgeschlagen.

Die Kochstelle ist insbesondere Teil eines Haushaltsgeräts. Die Kochstelle findet vorzugsweise bei einem Gasherd Anwendung.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt in einer schematischen Aufsicht ein Gasventil mit einer Ausführungsform einer Betätigungsvorrichtung für das Gasventil;
Fig. 2 zeigt in einer schematischen perspektivischen Explosionsansicht die Betätigungsvorrichtung gemäß der Fig. 1;
Fig. 3 zeigt in einer schematischen perspektivischen Ansicht die Betätigungsvorrichtung gemäß der Fig. 1;
Fig. 4 zeigt in einer schematischen perspektivischen Ansicht die Betätigungsvorrichtung gemäß der Fig. 1 ohne ein Gehäuse;
Fig. 5 zeigt in einer weiteren schematischen Ansicht die Betätigungsvorrichtung gemäß der Fig. 1 ohne das Gehäuse;
Fig. 6 zeigt in einer schematischen Schnittansicht die Betätigungsvorrichtung gemäß der Fig. 1;
Fig. 7 zeigt in einer schematischen Seitenansicht die Betätigungsvorrichtung gemäß der Fig. 1;
Fig. 8 zeigt in einer weiteren schematischen Seitenansicht die Betätigungsvorrichtung gemäß der Fig. 1;
Fig. 9 zeigt in einer weiteren schematischen Seitenansicht die Betätigungsvorrichtung gemäß der Fig. 1;
Fig. 10 zeigt in einer weiteren schematischen Ansicht die Betätigungsvorrichtung gemäß der Fig. 1;
Fig. 11 zeigt in einer weiteren schematischen Seitenansicht die Betätigungsvorrichtung gemäß der Fig. 1;
Fig. 12 zeigt in einer weiteren schematischen Seitenansicht die Betätigungsvorrichtung gemäß der Fig. 1;
Fig. 13 zeigt in einer weiteren schematischen Seitenansicht die Betätigungsvorrichtung gemäß der Fig. 1; und
Fig. 14 zeigt in einer weiteren schematischen Seitenansicht die Betätigungsvorrichtung gemäß der Fig. 1.

In den Figuren sind gleiche oder funktionsgleiche Elemente mit denselben Bezugszeichen versehen worden, sofern nichts anderes angegeben ist.

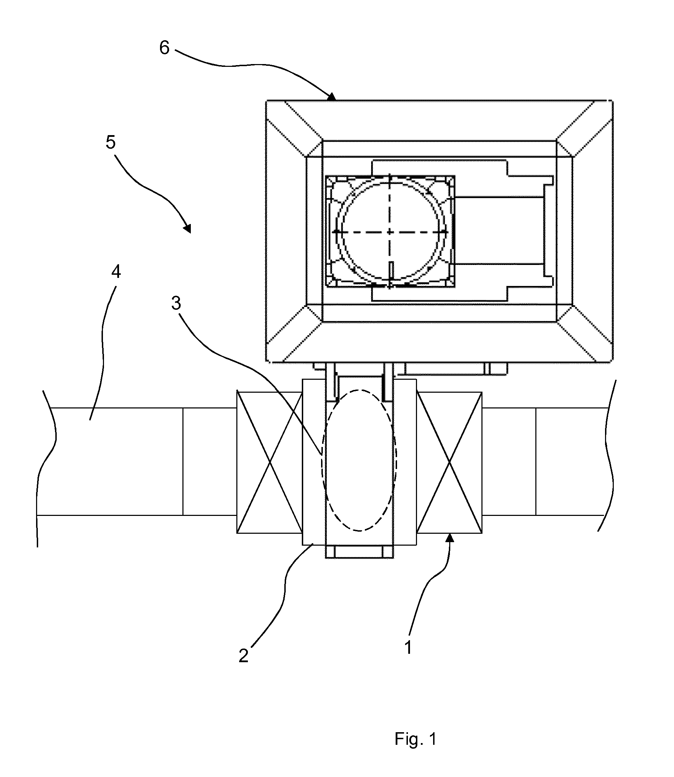

Die Fig. 1 zeigt eine schematische Aufsicht einer Ausführungsform eines Gasventils 1. Das Gasventil 1 weist ein Ventilgehäuse 2 und ein drehbar in dem Ventilgehäuse 2 angeordnetes Schließelement 3 auf. Das Schließelement 3 kann beispielsweise ein Drosselküken, eine Drosselklappe oder eine Drosselkugel sein. Das Gasventil 1 ist vorzugsweise an oder in einer Gashauptleitung 4 einer Kochstelle 5 montiert. Die Kochstelle 5 ist vorzugsweise ein Teil eines Haushaltsgeräts. Das Haushaltsgerät kann ein Gasherd sein. Das Gasventil 1 ist vorzugsweise dazu eingerichtet, einen durch die Gashauptleitung 4 strömenden Gasstrom wahlweise zu unterbrechen oder freizugeben. Weiterhin zeigt die Fig. 1 eine Betätigungsvorrichtung 6 für das Gasventil 1.

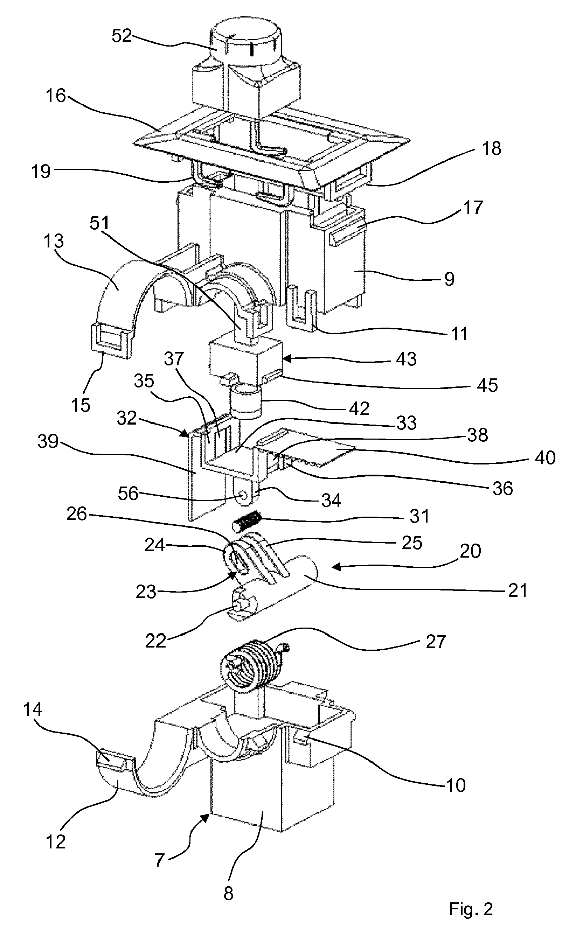

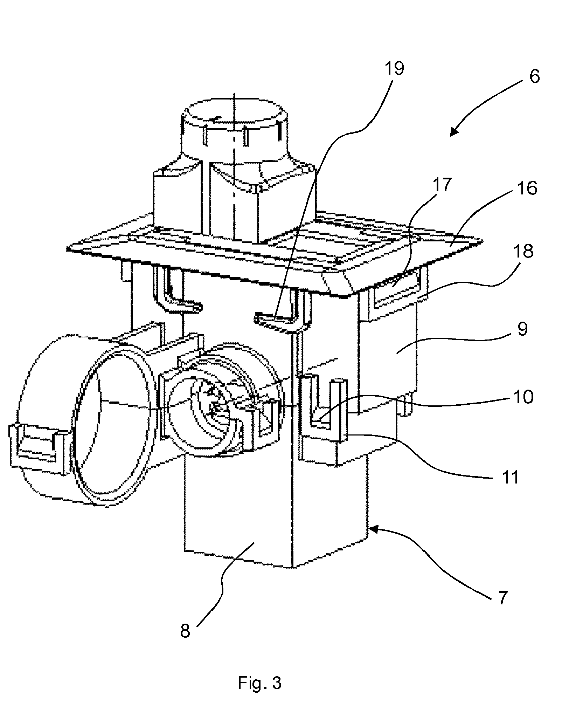

Die Fig. 2 zeigt die Betätigungsvorrichtung 6 für das Gasventil 1 in einer schematischen perspektivischen Explosionsdarstellung. Die Fig. 3 zeigt die Betätigungsvorrichtung 6 in einer schematischen perspektivischen Ansicht. Im Folgenden wird auf die Figuren 2 und 3 gleichzeitig Bezug genommen.

Die Betätigungsvorrichtung 6 weist ein Gehäuse 7 mit einem kastenförmigen Gehäuseunterteil 8 und einem kastenförmigen Gehäuseoberteil 9 auf. Das Gehäuseunterteil 8 ist mit Hilfe mehrerer Schnapphaken 10, von denen in der Fig. 2 lediglich einer mit einem Bezugszeichen bezeichnet ist, mit dem Gehäuseoberteil 9 verschnappbar. Hierzu sind an dem Gehäuseoberteil 9 mehrere ösenförmige Eingriffsabschnitte 11 vorgesehen, von denen in der Fig. 2 jedoch lediglich einer mit einem Bezugszeichen versehen ist. Das Gehäuseunterteil 8 und das Gehäuseoberteil 9 sind beispielsweise als Kunststoffbauteile, insbesondere als Kunststoffspritzgussbauteile, ausgeführt.

An dem Gehäuseunterteil 8 ist ferner ein erster Klemmschellenabschnitt 12 vorgesehen. Der erste Klemmschellenabschnitt 12 weist eine Halbkreisform auf. Weiterhin ist an dem Gehäuseoberteil 9 ein zweiter zu dem ersten Klemmschellenabschnitt 12 korrespondierender Klemmschellenabschnitt 13 vorgesehen. Der zweite Klemmschellenabschnitt 13 weist vorzugsweise ebenfalls eine Halbkreisform auf. Die Klemmschellenabschnitte 12, 13 sind mit Hilfe eines an dem unteren Klemmschellenabschnitt 12 vorgesehenen Schnapphakens 14, der dazu eingerichtet ist, in einen an dem oberen Klemmschellenabschnitt 13 vorgesehenen ösenförmigen Eingriffsabschnitt 15 einzugreifen, miteinander verschnappbar oder verclipsbar. Mit Hilfe der Klemmschellenabschnitte 12, 13 kann das Gehäuse 7 an dem Ventilgehäuse 2 des Gasventils 1 festgeklemmt werden. Insbesondere ist das Ventilgehäuse 2 zwischen dem Gehäuseoberteil 9 und dem Gehäuseunterteil 8 festklemmbar. Das Ventilgehäuse 2 ist insbesondere zum Befestigen desselben an einem rohrförmigen Element eingerichtet. Das rohrförmige Element kann beispielsweise das Ventilgehäuse 2 oder die Gashauptleitung 4 sein.

Das Gehäuse 7 weist ferner einen Abdeckrahmen 16 auf, der über vorzugsweise zwei an Schmalseiten des kastenförmigen Gehäuseoberteils 9 vorgesehenen Schnapphaken 17, von denen in Fig. 2 lediglich einer mit einem Bezugszeichen versehen ist, verschnappbar ist. Hierzu sind an dem Abdeckrahmen 16 insbesondere zwei ösenförmige Eingriffsabschnitte 18 vorgesehen, von denen in Fig. 2 lediglich einer mit einem Bezugszeichen versehen ist. Der Abdeckrahmen 16 umfasst ferner mehrere in Richtung des Gehäuseoberteils 9 weisende Schnapphaken 19, insbesondere vorzugsweise vier Schnapphaken 19, von denen in der Fig. 2 lediglich einer mit einem Bezugszeichen versehen ist, auf. Mit Hilfe der Schnapphaken 19 ist das Gehäuse 7 beispielsweise an einem Kochmuldenblech oder einer Kochfeldplatte einschnappbar oder einclipsbar. Der Abdeckrahmen 16 ist vorzugsweise ein Kunststoffspritzgussteil.

Die Betätigungsvorrichtung 6 umfasst ferner einen Schwingarm 20, der in dem Gehäuseunterteil 8 aufgenommen ist. Der Schwingarm 20 weist einen Wellenabschnitt 21 auf. Der zylinderförmige Wellenabschnitt 21 weist an einer ersten Stirnfläche einen Verbindungsabschnitt 22 auf, über den der Wellenabschnitt 21 mit dem Schließelement 3 des Gasventils 1 koppelbar ist. Der Verbindungsabschnitt 22 ist insbesondere in Form einer Klauenkupplung ausgebildet. Der Verbindungsabschnitt 22 greift formschlüssig in einen an dem Schließelement 3 vorgesehenen Eingriffsabschnitt ein. Der Schwingarm 20 weist ferner einen sich seitlich aus dem Wellenabschnitt 21 heraus erstreckenden Befestigungsabschnitt 23 auf. Der Befestigungsabschnitt 23 weist zwei benachbart und voneinander beabstandet angeordnete Rippen 24, 25 auf. Die Rippen 24, 25 werden von einem Langloch 26 durchbrochen. Das Langloch 26 durchbricht die Rippen 24, 25 in einer Axialrichtung des Wellenabschnitts 21. Der Befestigungsabschnitt 23 ist bezüglich einer Länge des Wellenabschnitts 21 mittig angeordnet.

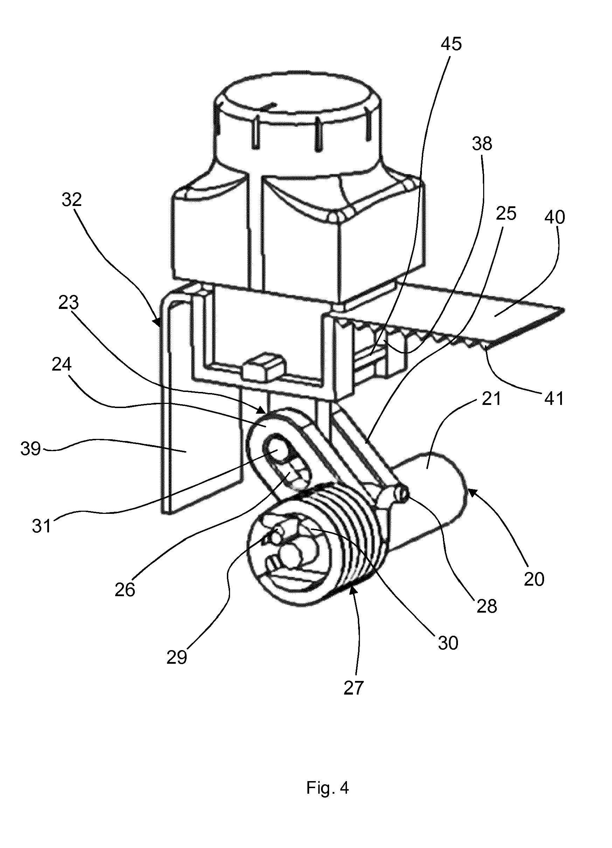

Die Betätigungsvorrichtung 6 weist ferner eine erste Federeinrichtung 27 auf. Die erste Federeinrichtung 27 nimmt den Wellenabschnitt 21 des Schwingarms 20 auf. Insbesondere ist die erste Federeinrichtung 27 zwischen dem Verbindungsabschnitt 22 und der Rippe 24 des Befestigungsabschnitts 23 des Schwingarms 20 angeordnet. Die Federeinrichtung 27 ist vorzugsweise eine Rotationsfeder. Ein in der Fig. 4 gezeigter erster Endabschnitt 28 der Federeinrichtung 27 liegt vorzugsweise innenseitig an dem Gehäuseunterteil 8 des Gehäuses 7 an oder ist in einer entsprechenden an dem Gehäuseunterteil 8 vorgesehenen Aufnahmetasche aufgenommen. Ein in der Fig. 4 gezeigter zweiter Endabschnitt 29 der Federeinrichtung 27 liegt an einem an dem Verbindungsabschnitt 22 vorgesehenen Vorsprung 30 des Wellenabschnitts 21 an. Die Federeinrichtung 27 ist dazu eingerichtet, das Schließelement 3 in Richtung einer Schließposition, in der das Gasventil 1 geschlossen ist, vorzuspannen. Hierdurch wird bei einem Defekt der Betätigungsvorrichtung 6, beispielsweise bei einem Bruch des Wellenabschnitts 21 das Schließelement 3 mit Hilfe der Federeinrichtung 27 selbsttätig geschlossen.

Der Schwingarm 20 ist mit Hilfe eines Verbindungsstifts 31 mit einem Verbindungselement 32 der Betätigungsvorrichtung 6 verbunden. Der Verbindungsstift 31 ist vorzugsweise ein Stahlstift mit einem kreisrunden Querschnitt.

Das Verbindungselement 32 weist einen plattenförmigen Basisabschnitt 33 auf. Der Basisabschnitt 33 ist vorzugsweise rechteckförmig. Aus einer Unterseite des Basisabschnitts 33 erstreckt sich ein rippenförmiger Verbindungsabschnitt 34 heraus. An dem rippenförmigen Verbindungsabschnitt 34 ist eine Bohrung 56 vorgesehen, in der der Verbindungsstift 31 aufgenommen ist. Beispielsweise ist der Verbindungsstift 31 in die Bohrung 56 eingepresst, eingeklebt oder dergleichen. Der Verbindungsabschnitt 34 ist zwischen den beiden Rippen 24, 25 des Befestigungsabschnitts 23 des Schwingarms 20 aufgenommen. Der Verbindungsstift 31 ist ferner in dem an dem Schwingarm 20 vorgesehenen Langloch 26 verschiebbar aufgenommen. Bei einem Verlagern des Verbindungselements 32 bewegt sich der Verbindungsstift 31 in dem Langloch 26.

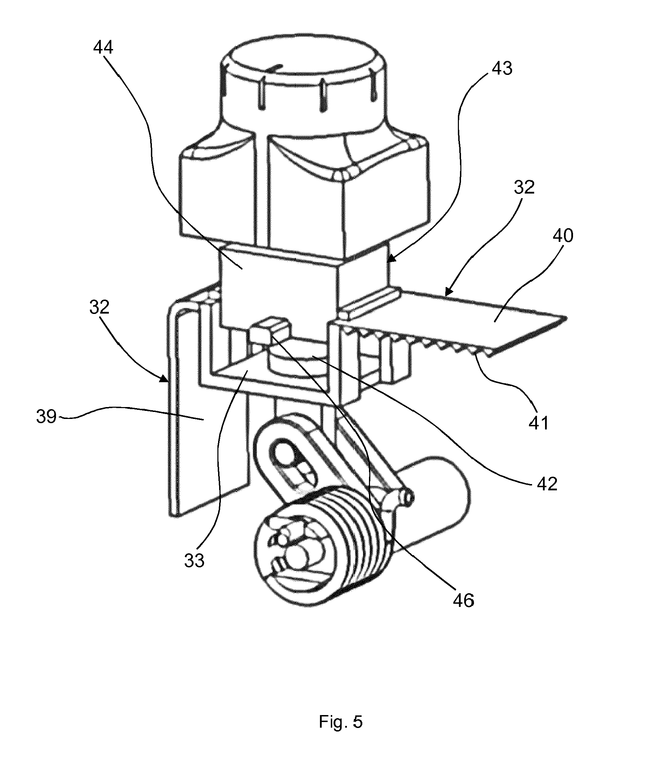

An Randabschnitten des Basisabschnitts 33 erstreckt sich aus einer Oberseite des Basisabschnitts 33 jeweils eine Seitenwand 35, 36 heraus. In den Seitenwänden 35, 36 sind jeweils Führungsnuten 37, 38 vorgesehen. Die Führungsnuten 37, 38 verlaufen von dem Basisabschnitt 33 weg und durchbrechen die Seitenwänden 35, 36. An die Seitenwand 35 schließt ein nach unten in Richtung des Verbindungsabschnitts 34 erstreckender Seitenabschnitt 39 an. An die Seitenwand 36 schließt sich ein senkrecht zu dieser angeordneter flexibel verformbarer Seitenabschnitt 40 an. Der Seitenabschnitt 40 ist an einer Unterseite mit einer Vielzahl Zähnen oder Rippen 41 versehen, von denen in den Fig. 4 und 5 lediglich eine mit einem Bezugszeichen versehen ist. Der Seitenabschnitt 40 ist vorzugsweise elastisch verformbar, wobei die Rippen 41 dem Seitenabschnitt 40 eine zusätzliche Stabilität geben und eine definierte Verformung des Seitenabschnitts 40 ermöglichen.

Die Betätigungsvorrichtung 6 weist ferner eine zweite Federeinrichtung 42 auf. Die zweite Federeinrichtung 42 ist insbesondere eine Schraubenfeder oder Zylinderfeder. Die zweite Federeinrichtung 42 ist vorzugsweise auf dem Basisabschnitt 33 des Verbindungselements 32 angeordnet. Insbesondere ist die zweite Federeinrichtung 42 zwischen dem Verbindungselement 32 und einem Betätigungselement 43 der Betätigungsvorrichtung 6 angeordnet.

Das Betätigungselement 43 weist, wie in der Fig. 5 gezeigt, einen quaderförmigen Grundkörper 44 auf. Der quaderförmige Grundkörper 44 kann unterseitig eine Aufnahme für die zweite Federeinrichtung 42 aufweisen. Aus einer Schmalseite des Grundkörpers 44 erstrecken sich vorzugsweise beidseitig leistenförmige Eingriffsabschnitte 45 heraus (Fig. 2, 4). In den Figuren ist lediglich einer der Eingriffsabschnitte 45 gezeigt und mit einem Bezugszeichen versehen. Die Eingriffsabschnitte 45 greifen in die Führungsnuten 37, 38 des Verbindungselements 32 ein. Hierdurch ist das Betätigungselement 43 mit dem Verbindungselement 32 gekoppelt und an diesem geführt.

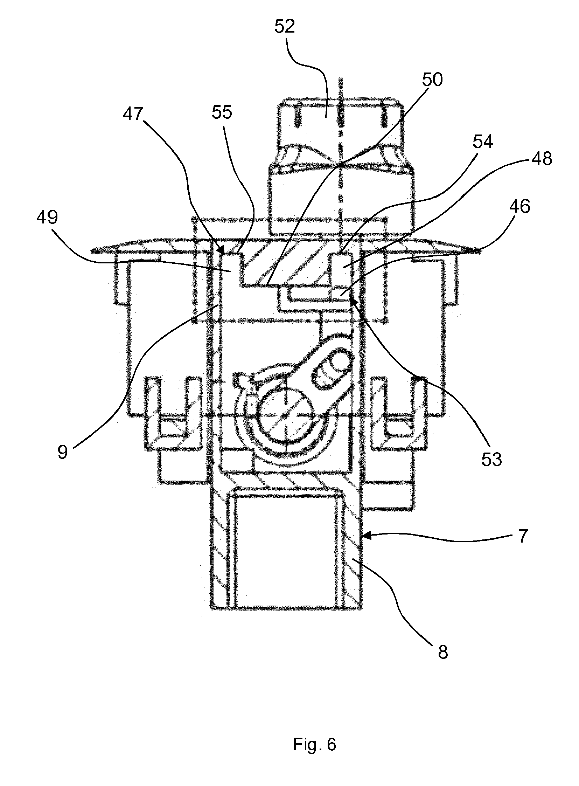

An dem quaderförmigen Grundkörper 44 ist, wie die Fig. 5 zeigt, vorzugsweise an einer Langseite jeweils beidseitig ein Führungsstift 46 vorgesehen. Insbesondere sind zwei derartige Führungsstifte 46 vorgesehen. Die zweite Federeinrichtung 42 ist derart angeordnet, dass diese das Betätigungselement 43 von dem Basisabschnitt 33 des Verbindungselements 32 wegdrückt. Die Führungsstifte 46 greifen, wie die Fig. 6 zeigt, in eine in dem Gehäuseoberteil 9 vorgesehene U-förmige Kulissenführung 47 ein. Die Kulissenführung 47 weist einen ersten Verriegelungsabschnitt 48 und einen beabstandet von dem ersten Verriegelungsabschnitt 48 angeordneten zweiten Verriegelungsabschnitt 49 auf. Die Verriegelungsabschnitte 48, 49 sind mittels eines horizontal verlaufenden Verbindungsabschnitts 50 der Kulissenführung 47 miteinander verbunden. Die Verriegelungsabschnitte 48, 49 verlaufen senkrecht zu dem Verbindungsabschnitt 50. Insbesondere sind zwei voneinander beabstandet angeordnete Kulissenführungen 47 vorgesehen, so dass das Betätigungselement 43 beidseitig geführt ist. Vorzugsweise ist jedem der Führungsstifte 46 eine Kulissenführung 47 zugeordnet.

Oberseitig aus dem Grundkörper 44 des Betätigungselements 43 heraus erstreckt sich ein zylinderförmiger Aufnahmeabschnitt 51. Auf den zylinderförmigen Aufnahmeabschnitt 51 ist ein Betätigungsknopf 52 der Betätigungsvorrichtung 6 aufsteckbar. Eine Verriegelungseinrichtung 53 der Betätigungsvorrichtung 6 umfasst, wie in der Fig. 6 gezeigt, den Führungsstift 46 bzw. die Führungsstifte 46 des Betätigungselements 43 und die Kulissenführung 47 bzw. die Kulissenführungen 47.

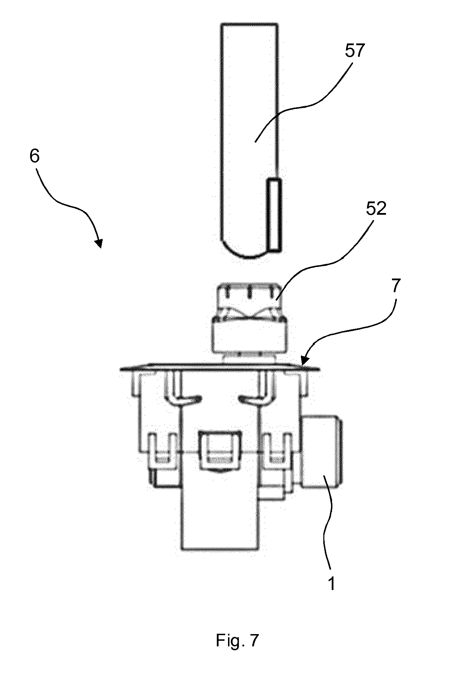

Die Funktionsweise der Betätigungsvorrichtung 6 wird im Folgenden anhand der Fig. 7 - 14 erläutert. In den Figuren 7 - 14 ist ein Finger 57 eines Benutzers gezeigt. Die Fig. 7 zeigt die Betätigungsvorrichtung 6 in einer Offenposition, in der das Gasventil 1 geöffnet ist. Das Betätigungselement 43 ist mit Hilfe der ersten Federeinrichtung 27 in Richtung einer Schließposition der Betätigungsvorrichtung 6, in der das Gasventil 1 geschlossen ist, vorgespannt. Die Verriegelungseinrichtung 53, die den Führungsstift 46 des Betätigungselements 43 und die Kulissenführung 47 umfasst, verriegelt die Betätigungsvorrichtung 6 in der Offenposition. In der in Fig. 7 gezeigten Offenposition greift der Führungsstift 46 des Betätigungselements 43 in den ersten Verriegelungsabschnitt 48 der Kulissenführung 47 ein. Dabei ist das Betätigungselement 43 mit Hilfe der zweiten Federeinrichtung 42 in Richtung eines in Fig. 6 gezeigten Endabschnitts 54 des ersten Verriegelungsabschnitts 48 federvorgespannt. In der Offenposition liegt der Führungsstift 46 an dem Endabschnitt 54 an.

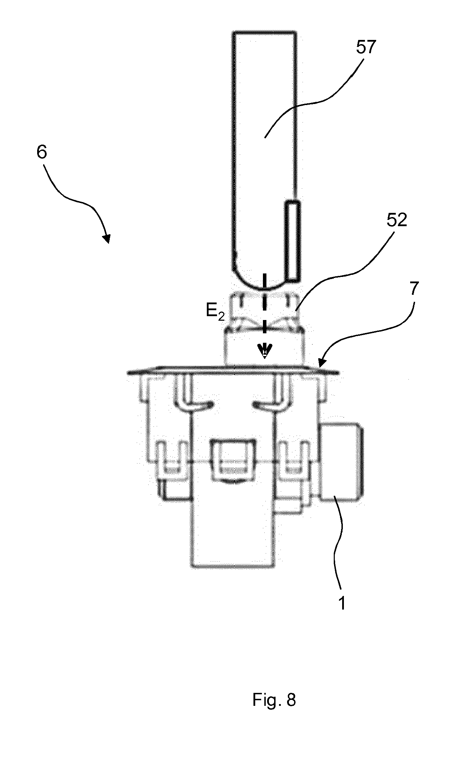

Durch ein in der Fig. 8 gezeigtes Herunterdrücken des Betätigungselements 43 bzw. des Betätigungsknopfs 52 entgegen einer Federkraft der zweiten Federeinrichtung 42 in einer zweiten Verschieberichtung E₂ des Betätigungselements 43 wird der Führungsstift 46 des Betätigungselements 43 aus dem ersten Verriegelungsabschnitt 48 der Kulissenführung 47 herausgehoben.

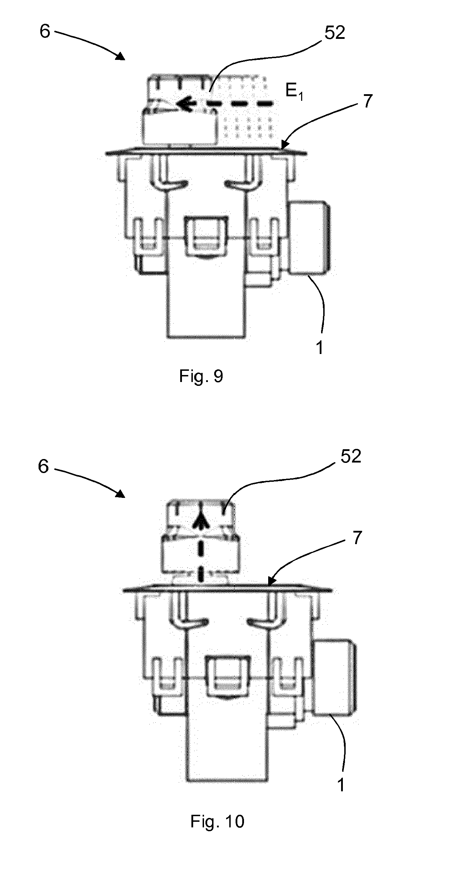

Dadurch, dass das Betätigungselement 43 in Richtung der Schließposition federvorgespannt ist, bewegt sich das Betätigungselement 43, wie in der Fig. 9 gezeigt, aufgrund der Federkraft der ersten Federeinrichtung 27 in einer ersten Verschieberichtung E₁ des Betätigungselements 43 selbsttätig entlang des Verbindungsabschnitts 50 der Kulissenführung 47 in Richtung des zweiten Verriegelungsabschnitts 49. Der gerippte Seitenabschnitt 40 des Verbindungselements 32 rollt sich dabei in dem Gehäuse 7 auf.

Sobald der Führungsstift 46 den zweiten Verriegelungsabschnitt 49 der Kulissenführung 47 erreicht, wird dieser, wie in Fig. 10 gezeigt, mit Hilfe der Federkraft der zweiten Federeinrichtung 42 in den zweiten Verriegelungsabschnitt 49 der Kulissenführung 47 hinein verlagert und gegen einen in der Fig. 6 gezeigten Endabschnitt 55 des zweiten Verriegelungsabschnitts 49 gedrückt. Hierdurch wird der Betätigungsknopf bzw. das Betätigungselement 43, wie in der Fig. 10 mittels eines Pfeils gezeigt, von dem Gehäuse 7 der Betätigungsvorrichtung 6 weg bewegt. Das Gasventil 1 ist in dieser Position geschlossen.

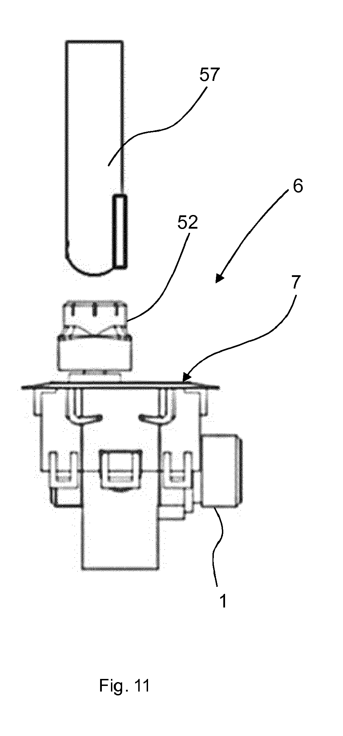

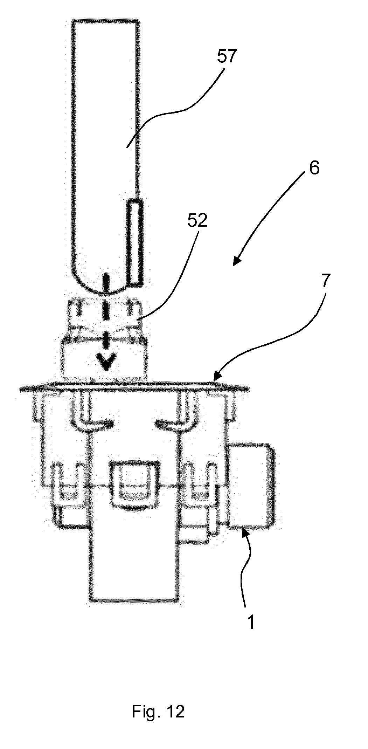

Zum Öffnen des Gasventils 1 wird wie in den Fig. 11 und 12 gezeigt, das Betätigungselement 43 bzw. der Betätigungsknopf 52 entgegen der Federkraft der zweiten Federeinrichtung 42 in Richtung des Gehäuses 7 der Betätigungsvorrichtung 6 gedrückt, wie in der Fig. 12 mit Hilfe eines Pfeils verdeutlicht ist. Dabei wird der Führungsstift 46 des Betätigungselements 43 aus dem zweiten Verriegelungsabschnitt 49 der Kulissenführung 47 herausgehoben.

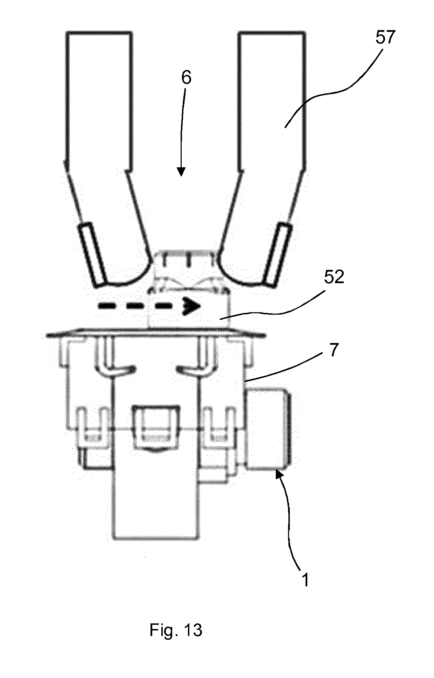

Durch ein gleichzeitiges Verschieben in Richtung der Offenposition, wie in Fig. 13 mittels eines Pfeils dargestellt, gleitet der Führungsstift 46 des Betätigungselements 43 entlang des Verbindungsabschnitts 50 der Kulissenführung 47. Hierbei wird das Betätigungselement 43 entgegen der Federkraft der ersten Federeinrichtung 27 bewegt. Die erste Federeinrichtung 27 wird dabei gespannt. Beim Bewegen des Betätigungselements 43 von der in Fig. 12 gezeigten Position in die in Fig. 13 gezeigte Position gleitet der Verbindungsstift 31 in dem Langloch 26 des Schwingarms 20. Das Langloch 26 bewegt sich bei einer Rotationsbewegung des Schwingarms 20 auf einer Kreisbahn. Der Verbindungsstift 31 bewegt sich beim Verlagern des Verbindungselements 32 auf einer Geraden. Dadurch, dass der Verbindungsstift 31 in dem Langloch 26 gleitet, wird beim Verdrehen des Schwingarms 20 ein Verklemmen des Verbindungsstifts 31 in dem Langloch 26 verhindert.

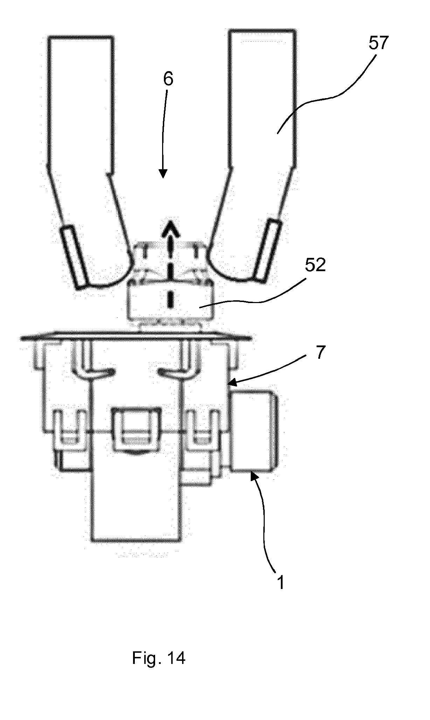

Sobald der Führungsstift 46 über die gesamte Länge des Verbindungsabschnitts 50 abgeglitten ist, wird das Betätigungselement mit Hilfe der Federkraft der zweiten Federeinrichtung 42 wieder in den ersten Verriegelungsabschnitt 48 der Kulissenführung 47 hinein verlagert, wie in der Fig. 14 mit Hilfe eines Pfeils angedeutet ist.

Mit Hilfe der Betätigungsvorrichtung 6 ist eine lineare Verschiebebewegung des Betätigungsknopfs 52 in eine Drehbewegung des Schließelements 3 umsetzbar. Insbesondere ist zum Schließen des Gasventils 1 nur ein Druck auf den Betätigungsknopf 52 erforderlich. Die Betätigungsvorrichtung 6 schließt das Gasventil 1 mit Hilfe der ersten Federeinrichtung 27 selbsttätig. Hierdurch kann die Betätigungsvorrichtung 6 eine Not-Aus-Funktion erfüllen. Zum Öffnen des Gasventils 1 ist eine kombinierte Druck-/Verschiebebewegung des Betätigungsknopfs 52 erforderlich. Hierdurch können herstellerdefinierte Sicherheitsanforderungen an das Öffnen des Gasventils 1 eingehalten werden. Aufgrund der linearen Bewegung des Betätigungsknopfes 52 beim Öffnen und Schließen des Gasventils 1 ist die Betätigungsvorrichtung 6 im Vergleich zu bekannten Betätigungsvorrichtungen mit einer rotatorischen Bewegungskomponente auch bei einem beengten Bauraum einsetzbar.

Obwohl die vorliegende Erfindung anhand von Ausführungsbeispielen beschrieben wurde, ist sie vielfältig modifizierbar.

### Verwendete Bezugszeichen:

- 1: Gasventil
- 2: Ventilgehäuse
- 3: Schließelement
- 4: Gashauptleitung
- 5: Kochstelle
- 6: Betätigungsvorrichtung
- 7: Gehäuse
- 8: Gehäuseunterteil
- 9: Gehäuseoberteil
- 10: Schnapphaken
- 11: Eingriffsabschnitt
- 12: Klemmschellenabschnitt
- 13: Klemmschellenabschnitt
- 14: Schnapphaken
- 15: Eingriffsabschnitt
- 16: Abdeckrahmen
- 17: Schnapphaken
- 18: Eingriffsabschnitt
- 19: Schnapphaken
- 20: Schwingarm
- 21: Wellenabschnitt
- 22: Verbindungsabschnitt
- 23: Befestigungsabschnitt
- 24: Rippe
- 25: Rippe
- 26: Langloch
- 27: Federeinrichtung
- 28: Endabschnitt
- 29: Endabschnitt
- 30: Vorsprung
- 31: Verbindungsstift
- 32: Verbindungselement
- 33: Basisabschnitt
- 34: Verbindungsabschnitt
- 35: Seitenwand
- 36: Seitenwand
- 37: Führungsnut
- 38: Führungsnut
- 39: Seitenabschnitt
- 40: Seitenabschnitt
- 41: Rippe
- 42: Federeinrichtung
- 43: Betätigungselement
- 44: Grundkörper
- 45: Eingriffsabschnitt
- 46: Führungsstift
- 47: Kulissenführung
- 48: Verriegelungsabschnitt
- 49: Verriegelungsabschnitt
- 50: Verbindungsabschnitt
- 51: Aufnahmeabschnitt
- 52: Betätigungsknopf
- 53: Verriegelungseinrichtung
- 54: Endabschnitt
- 55: Endabschnitt
- 56: Bohrung
- 57: Finger

- E₁: Verschieberichtung
- E₂: Verschieberichtung

## Patentansprüche

1. Betätigungsvorrichtung (6) für ein Gasventil (1), mit:
einem Betätigungselement (43), wobei das Betätigungselement (43) mit einem Schließelement (3) des Gasventils (1) wirkverbunden ist, wobei das Betätigungselement (43) von einer Offenposition, in der das Gasventil (1) geöffnet ist, in eine Schließposition, in der das Gasventil (1) geschlossen ist, verschiebbar ist, und wobei das Betätigungselement (43) mit Hilfe einer ersten Federeinrichtung (27) in Richtung der Schließposition vorgespannt ist, und
einer Verriegelungseinrichtung (53), die eine an einem Gehäuse (7) der Betätigungsvorrichtung (6) vorgesehene Kulissenführung (47) und einen an dem Betätigungselement (43) vorgesehenen Führungsstift (46) aufweist, der in die Kulissenführung (47) eingreift, wobei das Betätigungselement (43) mit Hilfe einer zweiten Federeinrichtung (42) derart vorgespannt ist, dass der Führungsstift (46) in der Offenposition in einen ersten Verriegelungsabschnitt (48) der Kulissenführung (47) eingreift, um das Betätigungselement (43) in der Offenposition zu verriegeln, wobei der Führungsstift (46) durch ein Verlagern des Betätigungselements (43) entgegen einer Federkraft der zweiten Federeinrichtung (42) aus dem ersten Verriegelungsabschnitt (48) heraushebbar ist und wobei das Betätigungselement (43), sobald der Führungsstift (46) aus dem ersten Verriegelungsabschnitt (48) herausgehoben ist, von einer Federkraft der ersten Federeinrichtung (27) selbsttätig in die Schließposition verschiebbar ist.

2. Betätigungsvorrichtung nach Anspruch 1, **dadurch gekennzeichnet, dass** eine erste Verschieberichtung (E₁) des Betätigungselements (43) von der Offenposition in die Schließposition senkrecht zu einer zweiten Verschieberichtung (E₂) des Betätigungselements (43) beim Herausheben des Führungsstifts (46) aus dem ersten Verriegelungsabschnitt (48) ist.

3. Betätigungsvorrichtung nach Anspruch 1 oder 2, **dadurch gekennzeichnet, dass** die Kulissenführung (47) U-förmig ist.

4. Betätigungsvorrichtung nach einem der Ansprüche 1 - 3, **dadurch gekennzeichnet, dass** die Kulissenführung (47) einen zweiten Verriegelungsabschnitt (49) aufweist, in den der Führungsstift (46) in der Schließposition eingreift, um das Betätigungselement (43) in der Schließposition zu verriegeln.

5. Betätigungsvorrichtung nach Anspruch 4, **dadurch gekennzeichnet, dass** der Führungsstift (46) durch ein Verlagern des Betätigungselements (43) entgegen der Federkraft der zweiten Federeinrichtung (42) aus dem zweiten Verriegelungsabschnitt (49) heraushebbar ist, und dass das Betätigungselement (43), sobald der Führungsstift (46) aus dem zweiten Verriegelungsabschnitt (49) herausgehoben ist, entgegen der Federkraft der ersten Federeinrichtung (27) in die Offenposition verschiebbar ist.

6. Betätigungsvorrichtung nach einem der Ansprüche 1 - 5, **dadurch gekennzeichnet, dass** das Betätigungselement (43) mit einem Schwingarm (20) wirkverbunden ist, der eine translatorische Bewegung des Betätigungselements (43) in eine rotatorische Bewegung eines Wellenabschnitts (21) des Schwingarms (20) umsetzt, und dass der Wellenabschnitt (21) mit dem Schließelement (3) gekoppelt ist.

7. Betätigungsvorrichtung nach Anspruch 5 oder 6, **dadurch gekennzeichnet, dass** das Betätigungselement (43) mit Hilfe eines Verbindungselements (32) mit dem Schwingarm (20) wirkverbunden ist.

8. Betätigungsvorrichtung nach Anspruch 7, **dadurch gekennzeichnet, dass** das Verbindungselement (32) mit Hilfe eines Verbindungsstifts (31) mit dem Schwingarm (20) gekoppelt ist, dass der Verbindungsstift (31) in einem an dem Schwingarm (20) vorgesehenen Langloch (26) aufgenommen ist, und dass der Verbindungsstift (31) beim Verschieben des Betätigungselements (43) von der Offenposition in die Schließposition oder umgekehrt in dem Langloch (26) verlagerbar ist.

9. Betätigungsvorrichtung nach Anspruch 7 oder 8, **dadurch gekennzeichnet, dass** die zweite Federeinrichtung (42) zwischen dem Verbindungselement (32) und dem Betätigungselement (43) angeordnet ist.

10. Betätigungsvorrichtung nach einem der Ansprüche 7 - 9, **dadurch gekennzeichnet, dass** das Verbindungselement (32) eine Führungsnut (37, 38) aufweist, in der ein Eingriffsabschnitt (45) des Betätigungselements (43) geführt ist.

11. Betätigungsvorrichtung nach einem der Ansprüche 7 - 10, **dadurch gekennzeichnet, dass** der Schwingarm (20) verschwenkbar an dem Verbindungselement (32) angelenkt ist.

12. Betätigungsvorrichtung nach einem der Ansprüche 1 - 10, **dadurch gekennzeichnet, dass** das Gehäuse (7) an einem Ventilgehäuse (2) des Gasventils (1) festklemmbar ist.

13. Betätigungsvorrichtung nach Anspruch 11, **dadurch gekennzeichnet, dass** das Gehäuse (7) ein Gehäuseoberteil (9) und ein Gehäuseunterteil (8) aufweist, zwischen denen das Ventilgehäuse (2) festklemmbar ist.

14. Gasventil (1) mit einem Ventilgehäuse (2), einem in dem Ventilgehäuse (2) drehbar angeordneten Schließelement (3) und einer Betätigungsvorrichtung (6) nach einem der Ansprüche 1 - 13.

15. Kochstelle (5), insbesondere Gaskochstelle, mit einer Betätigungsvorrichtung (6) nach einem der Ansprüche 1 - 13 und/oder einem Gasventil (1) nach Anspruch 14.
